# EUROPEAN PATENT SPECIFICATION

(11) **EP 3 417 311 B1**
(45) Date of publication and mention of the grant of the patent: **21.08.2019**
(21) Application number: 17711380.0
(22) Date of filing: 06.02.2017
(51) Int. Cl.: G01S 13/53, G01S 7/41, G01S 13/22

(54) **A METHOD FOR MOTION CLASSIFICATION USING A PULSED RADAR SYSTEM**
VERFAHREN ZUR BEWEGUNGSKLASSIFIZIERUNG MITHILFE EINES PULSRADARSYSTEMS
PROCÉDÉ DE CLASSIFICATION DE MOUVEMENT À L'AIDE D'UN SYSTÈME RADAR PULSÉ

(30) Priority: 29.04.2016 WO PCT/TR2016/005604
(43) Date of publication of application: 26.12.2018
(73) Proprietor: Aselsan Elektronik Sanayi ve Ticaret Anonim Sirketi, 06370 Ankara (TR)
(72) Inventor: ERTAN, Ali Erdem, Golbasi/Ankara (TR); PADAR, Mehmet Onur, Golbasi/Ankara (TR); CANDAN, Cagatay, Bilkent Ankara (TR)
(74) Representative: Yamankaradeniz, Kemal
(86) International application number: PCT/TR2017/050050
(87) International publication number: WO 2017/188905

(56) References cited:
- US-A1- 2003 164 792
- PADAR MEHMET ONUR ET AL: "Classification of human motion using radar micro-Doppler signatures with hidden Markov models", 2016 IEEE RADAR CONFERENCE (RADARCONF), IEEE, 2 May 2016 (2016-05-02), pages 1-6, XP032908985, DOI: 10.1109/RADAR.2016.7485201 [retrieved on 2016-06-03]
- BINGNAN PEI ET AL: "Radar target recognition based on peak location of HRR profile and HMMS classifiers", RADAR 2002 OCT. 15-17, 2002, PISCATAWAY, NJ, USA,IEEE, 15 October 2002 (2002-10-15), pages 414-418, XP010626905, ISBN: 978-0-85296-750-8

## Description

### Technical field

The present invention is related to a method for classification of motion of a moving target by sensing the type of motion of the target upon processing a signal received from the target, and to radar systems using said method.

### Prior Art

By means of Continuous-Wave Radars, velocity of a target can be determined and by virtue of additional processing, the change in motion-related Doppler frequency over time can be observed by extracting a time-frequency map of a plurality of Doppler frequencies that are received from different parts of an object and generated based on motion. In the prior art, classification of motion models of a target can be made by processing time-frequency maps of motions of a target as an image (for example, as explained in the papers by Tahmoush D., Silvious J., "Radar Micro-Doppler for Long Range Front-View Gait Recognition", IEEE 3rd International Conference on Biometrics: Theory, Applications and Systems, 2009; by Vignaud L., Ghaleb A., Kernee J. L., "Radar high resolution range & micro-Doppler analysis of human motions," International Radar Conference, pp. 1-6, 2009 and by Youngwook K., Hao L., "Human Activity Classification Based on Micro-Doppler Signatures Using an Artificial Neural Network," IEEE Antennas and Propagation Society International Symposium, 2008), or by using the statistics of Doppler frequencies generated by different parts of the target (for example, as explained in the papers by Otero M., "Application of a continuous wave radar for human gait recognition," SPIE, vol. 5809, pp. 538-548, 2005 and by Smith G. E., Woodbridge K., Baker C. J., "Micro-Doppler Signature Classification," International Conference on Radar, CIE'06, pp. 1-4, 2006). By classifying the motion model of a target, it can be determined whether the target poses any danger or not. Especially in defence - related applications, it is ensured that the necessary defensive measures are implemented once it is sensed whether a target poses any danger.

Pulsed radars can be used to detect various moving objects in an environment at long distances. These radars illuminate the direction to be observed with short-time radiofrequency (RF) signal pulses that are emitted at certain intervals, and after the illumination is completed, said radars detect the location of targets by processing radio frequency echo reflected from the targets in the environment within a period of time up to the time of the next illumination. Since these systems do not perform illumination and monitoring simultaneously, the use of a single antenna is sufficient in said systems. Furthermore, it is possible to distinguish moving targets from stationary objects either by using a plurality of pulses within a coherent processing interval and also adjusting the time between the pulses properly, or by subjecting the echo signals received for a range cell to various filtering operations. Today, there are surveillance radars using these principles. But, these radars can detect the presence of only one moving target in a range cell. The classification of the detected target can only be found in the form of the motion of the target as a whole over time or in the kinetic properties of the target. However, when the target is classified as a human, it is not possible to identify the type of motion (e.g. running, walking, creeping) of this person by means of classical techniques.

In the prior art, different techniques can be implemented to classify motions of a target. One of the known applications is disclosed in the patent document no. EP1915636B1. EP1915636B1 discloses a method for identifying a moving object by using a statistical classifier. According to the method, a constant acoustic signal is transmitted on the object so as to allow identification of the object according to the modulation characteristics of the reflected signal modulated due to the motion of the moving target. However, in the mentioned application, it cannot be determined whether the target object poses any danger. Furthermore, in the mentioned application, a constant transmission is provided to the environment.

In another patent document no US7920088B2 of the prior art, a method for identification of targets located behind a barrier is disclosed. According to said method, standing - wave radar signals are transmitted on a target, and the motion of the target is determined by processing the signals that are returned from the target and also modulated based on the motion of the target. By extracting feature vectors from the motions of the target, classification of the target is ensured according to the extracted feature vectors. However, due to the fact that the feature vectors mentioned in said document are Fourier-based vectors, the method gets more complicated and a high processing power is required to operate the method. Likewise, a constant transmission is provided to the environment in the mentioned application.

In another patent document no US20030164792A1 of the prior art, a method for classification of different targets; wheeled vehicles, tracked vehicles and personnel, is disclosed. A pulsed-Doppler radar is used for this purpose by finding the target cell in the range and adding the related pulses together in order to generate a continuous signal comprised of multiple pulses. Assuming the signal is stationary in the processing interval; Fourier Transform is applied to the continuous signal so as to obtain the Doppler feature vectors that indicate the particular target class. Doppler based feature vectors are then used to generate the models of the targets via Hidden Markov Models by calculating initial state probabilities and state transition probabilities. Finally, classification is performed by selecting the target class with highest occurrence probability. However, this method is not an effective way in sense of computational cost due to large size of the Fourier-based feature vectors.

### Brief Description of the Invention

With the present invention, there is provided a method for classification of the motion of a moving target by means of a radar signal received from the target. The method comprises the steps of: creating different motion-specific models using Hidden Markov Model for all the motions desired to be classified; obtaining a database which includes the created different motion models; detecting a target by a pulsed radar; determining the range cell of the detected target within a coherent processing interval; storing signals received, at each pulse, from the target within said range cell; finding feature vectors, at a certain frequency, from a continuous signal obtained by processing the received signals; generating a feature vector time series by arranging the found feature vectors in succession; comparing the generated feature vector time series to the Hidden Markov Model-based motion models in the database so as to calculate its probability for each motion model that is present in the database; selecting the motion determined by the motion model with the highest calculated probability as the motion of the target, finding feature vectors of the target within the range cell comprising steps of; generating a continuous signal having a constant pulse repetition frequency by consecutively adding the pulses received by pulsed radar with constant pulse repetition at successive coherent processing intervals, receiving a signal at a certain window length at periodic intervals from the generated signal and finding a feature vector by multiplying the received signal by a transformation matrix.

In the method of the present invention, the motion of a target can be determined rapidly and effectively such that after the feature vectors of a target is calculated, a time series is generated by means of the obtained vectors, the probabilities that the generated time series belong to Hidden Markov Model-based motion models in a database are calculated, and the model with the highest probability among said models is determined as the motion of the target. Furthermore, in a preferred embodiment, thanks to obtaining the transformation matrix, which is used during calculation of the feature vectors, using principal component analysis, the number of the feature vectors obtained is reduced and the required calculation power is decreased.

### Object of the Invention

The object of the present invention is to provide a method for classification by sensing the type of motion of the target by means of the signal received from a moving target by a pulsed radar.

Another object of the present invention is to provide a method for motion classification, which is resistant to system noise.

Yet another object of the present invention is to provide a method for motion classification, which is to give a clue about the actions of a target by sensing the type of motion of the targets that are invisible and present at a long distance.

Still another object of the present invention is to provide a method with a reduced processing burden.

### Description of the Invention

Pulsed radars can be used to detect various moving objects in an environment at long distances. These radars illuminate the direction to be observed with short-time radiofrequency (RF) signal pulses that are emitted at certain intervals, and after the illumination is completed, said radars can detect the location of targets by processing radio frequency echo reflected from the targets in the environment within a period of time up to the time of the next illumination. However, in traditional applications, it is not possible to use pulsed radars for classification of the motion of a target. With the invention described herein, there is provided a method for classifying the motion of a target by processing a signal received from the target by the pulsed radar and by sensing the type of motion of the target. This gives an operator a clue of what the target is doing, and thus precautions, where necessary, can be taken against a target in case of suspicious circumstances.

The method of the present invention comprises the steps of creating different motion-specific models using Hidden Markov Model for all the motions desired to be classified; obtaining a database which includes the created different motion models; detecting a target by a pulsed radar; determining the range cell of the detected target within a coherent processing interval (CPI); storing signals received, at each pulse, from the target within said range cell; finding feature vectors, at a certain frequency, from a continuous signal obtained by processing the received signals; generating a feature vector time series by arranging the found feature vectors in succession; comparing the generated feature vector time series to the Hidden Markov Model-based motion models in the database so as to calculate its probability for each motion model that is present in the database; selecting the motion determined by the motion model with the highest calculated probability as the motion of the target.

The database mentioned in the method of the present invention is a trained database which comprises the motion models created by using Hidden Markov Model. In the Hidden Markov Model, the probability that an observed phenomenon belongs to a certain number of unobservable states is calculated by using a previous state, the probability of their transition from that state to other states, and the probability that the phenomenon belongs to each state. Thus, the probability that a feature vector time series belongs to a model is first calculated, by the above-mentioned rules, as the probability of each possible state transition series for transition between states as many as the number of feature vectors in said time series, and then the probabilities of all possible transition series are summed and calculated as the probability that the feature vector series belongs to the model. When there is more than one model in the classification database, the probability that the feature vector series belongs to all models is calculated individually, and the model with the highest probability can be selected as the model that the feature vector series belongs to, and thus the models in the database can be used for the purpose of classification. For a motion, the Hidden Markov Model is trained iteratively by Expectation-Maximization (EM) Method with a training set comprising the feature vector series extracted by using the pulsed radar data obtained from many different persons during their performance of a number of motions desired to be modelled, and the above-mentioned method.

At the end of the training, the model parameters, i.e. the probability of transition from one state to the other states, the probability that a phenomenon (the observed feature vectors) belongs to an unobservable state and the probability of being the first state are calculated. After the model parameters are updated at each iteration, the probability of belonging to that model based on the updated parameters and the probability of belonging to that model based on the parameters before updating are calculated for each feature vector series in the training set. Furthermore, the difference of the probability between these two conditions is also calculated. The training is terminated when the ratio of the average of the probability differences for the feature vector series in the entire training set to the average of their probabilities after updating is less than a threshold value (threshold value can be selected from -30 to -50 dB), and the model is finalized. After all the models are finalized, a database containing these models is obtained.

In a preferred embodiment of the invention, the step of finding feature vectors of a target within a range cell comprises the steps of: generating a continuous signal having a constant pulse repetition frequency by consecutively adding the pulses received by pulsed radar with constant pulse repetition frequency (PRF) at successive coherent processing intervals (CPIs); receiving a signal at a certain window length (5 - 45 milliseconds) at periodic intervals from the generated signal; finding a feature vector by multiplying the received signal by a transformation matrix. Here, in order to create the most suitable transformation matrix for the purpose of classification, the principal component analysis (PCA) is performed using a training set again. The transformation vectors found by the principal component analysis are perpendicular to each other, and the energy of the vectors is constant at 1. With this method, it is also ensured that radar reflection signal is separated into uncorrelated features. In addition, the total energy of the coefficients belonging to the vectors of principal component analysis in the data used for training is calculated during the analysis, and most of this energy is within the coefficients extracted by a small number of analysis vectors. The use of the analysis vectors which give only the coefficients of high energy content reduces the feature vector size, whereby not only facilitates the classifying training but also reduces the processing burden of the system.

In addition, the coefficients in the feature vectors extracted after converting the signal generated for the purpose of classification to a new base at certain intervals by a matrix formed by the principal component analysis vectors are also not correlated with each other. This increases the performance of the classifier.

In the other preferred embodiment of the invention, when the pulsed radar uses different pulse repetition frequency (PRF) at different coherent processing intervals (CPIs), a continuous signal having a constant pulse repetition frequency is generated by converting all the coherent processing intervals by asynchronous sampling frequency conversion method such that they have the same pulse repetition frequency, and by adding consecutively the coherent processing intervals having different number of pulses with the converted pulse repetition frequencies. In this manner, the pulses received with a different pulse repetition frequency at a plurality of coherent processing intervals that a target in the pulsed radar uses to resolve ambiguity of the Doppler and range can also be used to classify the motion of the target.

In another preferred embodiment of the present invention, the inventive method comprises, following the step of detecting a target within a range cell at a coherent processing interval, the step of controlling whether the same target changes the range cell in the next coherent processing interval. When the target changes the range cell, the observed amplitude fluctuations resulting from the differential transmission of the signal received from the target to the two consecutive range bins are corrected due to harmonic filtering. This correction process is performed by precisely estimating the location of the target in a range cell, and multiplying the observed value by the inverse function of the amplitude propagation effect on the range cells depending on the location of the target. Thus, the data which is to affect the classification of the motion of the target is ensured to be processed more accurately, whereby the classification is also made more correctly.

In another preferred embodiment of the invention, the method developed by the present invention comprises a step of updating the database during operation. In this application, the database updating comprises the steps of determining the type of motion of a target manually for example by an operator or confirming by the operator the classification decision made by the system, and of real-time updating the parameters of Hidden Markov Model based model of the motion determined in database.

In another preferred embodiment of the invention, such extracted feature vectors can be used to find a separate transformation matrix formed by using principal component analysis and corresponding motion data for each motion model; to extract, before finding the correlation with the Hidden Markov Model for each motion, the feature vectors by the transformation matrix belonging to that motion; and to control compatibility with the model both during operation and in training the Hidden Markov Model for a motion. Thus, since motion-specific transformation matrices are to be used, not only the feature length can be further reduced but also noise robustness can be much more increased.

According to the method of the present invention, the motion of a target can be determined rapidly and effectively such that after the feature vectors of a target is calculated, a time series is generated by means of the obtained vectors, the probabilities that the generated time series belongs to Hidden Markov Model-based motion models in a database are calculated, and the model with the highest probability among said models is determined as the motion of the target. Furthermore, in a preferred embodiment, since the transformation matrix used during calculation of feature vectors is obtained by using the principal component analysis, the number of feature vectors obtained is reduced, whereby the required computational power is decreased.

## Claims

1. A method for classification of motion of a moving target comprising steps of:
- creating different motion-specific models using Hidden Markov Model for all the motions desired to be classified; obtaining a database which includes the created different motion models;
- detecting a target by a pulsed radar;
- determining the range cell of the detected target within a coherent processing interval;
- storing signals received, at each pulse within a coherent processing interval, from the target within said range cell;
- finding feature vectors, at a certain frequency, from a continuous signal obtained by processing the stored signals and adding them together;
- generating a feature vector time series by arranging the found feature vectors in succession;
- comparing the generated feature vector time series to the Hidden Markov Model-based motion models in the database so as to calculate its probability for each motion model that is present in the database;
- selecting the motion determined by the motion model with the highest calculated probability as the motion of the target ;
**characterized in that** the step of finding feature vectors of the target within the range cell comprises the steps of
- generating a continuous signal having a constant pulse repetition frequency by consecutively adding the pulses received by pulsed radar with constant pulse repetition at successive coherent processing intervals,
- receiving a signal at a certain window length at periodic intervals from the generated signal,
- finding a feature vector by multiplying the received signal by a transformation matrix.

2. A method according to Claim 1, **characterized in that** the step of obtaining the database comprises steps of: training Hidden Markov Model iteratively for a motion by Expectation-Maximization method with a training set containing the pulsed radar data obtained from many different persons during their performance of a number of motions desired to be modelled and the feature vector series extracted from said data; calculating, at the end of the training, the model parameters, i.e., the probability of transition from one state to the other states, the probability that the observed feature vectors belong to a state and the probability of being the first state; finalizing the model for that motion by terminating the training when the probabilities obtained with the model updated at the end of an iteration for feature vector series in the training set during training are close to the probability values obtained with the model in a previous iteration; creating a database from models after finalizing the models for all motions.

3. A method according to Claim 1, **characterized in that** the transformation matrix is formed by using the principal component analysis on a training set.

4. A method according to Claim 1, **characterized in that** the transformation matrix is formed by being used on the training set containing only the corresponding motion so as to be specific to each motion.

5. A method according to Claim 1, **characterized in that** in the step of generating a continuous signal having a constant pulse repetition frequency by consecutively adding the pulses received by pulsed radar with constant pulse repetition at successive coherent processing intervals, when different pulse repetition frequency is used at different coherent processing intervals, a continuous signal having a constant pulse repetition frequency is generated by converting all the coherent processing intervals by asynchronous sampling frequency conversion method such that they have the same pulse repetition frequency and by adding consecutively the coherent processing intervals having different number of pulses with the converted pulse repetition frequencies.

6. A method according to Claim 1, **characterized in that** it comprises the steps of controlling, after the step of determining a range cell for a detected target, whether the target changes the range cell during its transition from a coherent processing interval to the next coherent processing interval; finding the propagation amount of the target into two adjacent range cells by controlling the propagation effect of the target to the range cells due to harmonic filtering, when the target changes the range cell; and correcting amplitude fluctuations by multiplying the inverse function of this propagation amount by the values calculated in the range cells.

7. A method according to Claim 1, **characterized by** comprising the steps of determining the type of motion of a target manually, for example by an operator, or confirming by the operator the classification decision made by the method, and of updating the Hidden Markov Model based parameters of the motion determined in the database by using the received feature vector data so as to update the database during operation.

## Patentansprüche

1. Verfahren zur Klassifizierung von Bewegung eines beweglichen Ziels, das die folgenden Schritte umfasst:
- Erzeugen unterschiedlicher bewegungsspezifischer Modelle unter Verwendung des verborgenen Markowmodells für alle Bewegungen, die klassifiziert werden sollen; Erhalten einer Datenbank, welche die erzeugten unterschiedlichen Bewegungsmodelle enthält;
- Erkennen eines Ziels durch Impulsradar;
- Bestimmen der Bereichszelle des erkannten Ziels in einem kohärenten Verarbeitungsintervall;
- Speichern von dem Ziel innerhalb der Bereichszelle empfangener Signale mit jedem Impuls in einem kohärenten Verarbeitungsintervall;
- Ermitteln von Merkmalsvektoren auf einer bestimmten Frequenz aus einem Dauersignal, erhalten durch Verarbeitung der gespeicherten Signale und Addieren dieser;
- Erzeugen einer Merkmalsvektorzeitreihe durch Anordnen der ermittelten Merkmalsvektoren nacheinander;
- Vergleichen der erzeugten Merkmalsvektorzeitreihe mit den Bewegungsmodellen auf der Basis des verborgenen Markowmodells in der Datenbank, um die Wahrscheinlichkeit für jedes in der Datenbank enthaltenen Bewegungsmodells zu berechnen;
- Auswählen der durch das Bewegungsmodell mit der höchsten errechneten Wahrscheinlichkeit als die Bewegung des Ziels bestimmten Bewegung; **dadurch gekennzeichnet, dass** der Schritt des Ermittelns von Merkmalsvektoren
des Ziels die folgenden Schritte umfasst:
- Erzeugen eines Dauersignals mit einer konstanten Impulsfolgefrequenz durch konsekutives Addieren der durch Impulsradar mit konstanter Impulsfolge in aufeinanderfolgenden kohärenten Verarbeitungsintervallen empfangenen Impulse;
- Empfangen eines Signals mit einer bestimmten Fensterlänge in periodischen Interfallen von dem erzeugten Signal;
- Ermitteln eines Merkmalsvektors durch Multiplizieren des empfangenen Signals mit einer Transformationsmatrix.

2. Verfahren nach Anspruch 1, **dadurch gekennzeichnet, dass** der Schritt des Erhaltens der Datenbank die folgenden Schritte umfasst: iteratives Trainieren des verborgenen Markowmodells für eine Bewegung durch Expectation-Maximization-Methode mit einer Trainingsreihe, welche die Impulsradardaten enthält, die von vielen verschiedenen Personen während deren Ausführung einer Reihe von Bewegungen erhalten werden, die modelliert werden sollen, und die aus den Daten extrahierte Merkmalsvektorreihe; Berechnen der Modellparameter am Ende des Trainings, d.h. der Wahrscheinlichkeit des Übergangs von einem Zustand in andere Zustände, der Wahrscheinlichkeit, dass die beobachteten Merkmalsvektoren zu einem Zustand gehören, und der Wahrscheinlichkeit, dass es sich um den ersten Zustand handelt; Abschließen des Modells für die Bewegung durch Beenden des Trainings, wenn die mit dem am Ende einer Iteration für Merkmalsvektorreihen in der Trainingsreihe während dem Training erhaltenen Wahrscheinlichkeiten nah an den Wahrscheinlichkeitswerten liegen, die mit dem Modell in einer vorherigen Iteration erhalten worden sind; Erzeugen einer Datenbank aus Modellen nach dem Abschluss der Modelle für alle Bewegungen.

3. Verfahren nach Anspruch 1, **dadurch gekennzeichnet, dass** die Transformationsmatrix unter Verwendung der Hauptkomponentenanalyse an einer Trainingsreihe gebildet wird.

4. Verfahren nach Anspruch 1, **dadurch gekennzeichnet, dass** die Transformationsmatrix gebildet wird durch Verwendung an der Trainingsreihe, welche nur die entsprechende Bewegung enthält, so dass sie für jede Bewegung spezifisch ist.

5. Verfahren nach Anspruch 1, **dadurch gekennzeichnet, dass** in dem Schritt des Erzeugens eines Dauersignals mit einer konstanten Impulsfolgefrequenz durch konsekutives Addieren der durch Impulsradar mit konstanter Impulsfolge in aufeinanderfolgenden kohärenten Verarbeitungsintervallen empfangenen Impulse, wenn in verschiedenen kohärenten Verarbeitungsintervallen eine unterschiedliche Impulsfolgefrequenz verwendet wird, ein Dauersignal mit einer konstanten Impulsfolgefrequenz erzeugt wird durch Umwandeln aller kohärenten Verarbeitungsintervalle durch ein asynchrones Abtastfrequenzumwandlungsverfahren, so dass sie die gleiche Impulsfolgefrequenz aufweisen, und durch konsekutives Addieren der kohärenten Verarbeitungsintervalle mit einer unterschiedlichen Anzahl an Impulsen mit den umgewandelten Impulsfolgefrequenzen.

6. Verfahren nach Anspruch 1, **dadurch gekennzeichnet, dass** dieses die folgenden Schritte umfasst: nach dem Schritt des Bestimmens einer Bereichszelle für ein erkanntes Ziel, das Überwachen, ob das Ziel während dessen Übergang von einem kohärenten Verarbeitungsintervall in das nächste kohärente Verarbeitungsintervall die Bereichszelle ändert; Ermitteln der Ausbreitungsstärke des Ziels in zwei benachbarte Bereichszellen durch Überwachung des Ausbreitungseffekts des Ziels in die Bereichszellen durch Oberschwingungsfiltern, wenn das Ziel die Bereichszelle wechselt; und Berichtigen von Amplitudenschwankungen durch Multiplizieren der Umkehrfunktion der Ausbreitungsstärke mit den in den Bereichszellen berechneten Werten.

7. Verfahren nach Anspruch 1, **dadurch gekennzeichnet, dass** dieses die folgenden Schritte umfasst: manuelles Bestimmen der Art der Bewegung eines Ziels, zum Beispiel durch eine Bedienungsperson, oder Bestätigen der durch das Verfahren getroffenen Klassifizierungsentscheidung durch die Bedienungsperson, und Aktualisieren der in der Datenbank bestimmten Bewegungsparameter auf der Basis des verborgenen Markowmodells unter Verwendung der empfangenen Merkmalsvektordaten, um die Datenbank während dem Betrieb zu aktualisieren.

## Revendications

1. Procédé de classification de mouvement d'une cible mobile comprenant les étapes consistant à :
- créer différents modèles spécifiques au mouvement à l'aide d'un modèle de Markov caché pour tous les mouvements à classifier ; obtenir une base de données qui inclut les différents modèles de mouvement créés ;
- détecter une cible par un radar puisé ;
- déterminer la cellule de distance de la cible détectée dans un intervalle de traitement cohérent ;
- stocker les signaux reçus, à chaque impulsion dans un intervalle de traitement cohérent, en provenance de la cible dans ladite cellule de distance ;
- trouver des vecteurs de caractéristiques, à une certaine fréquence, à partir d'un signal continu obtenu en traitant les signaux stockés et en les additionnant ;
- générer une série chronologique de vecteurs de caractéristiques en disposant les vecteurs de caractéristiques trouvés les uns après les autres ;
- comparer la série chronologique de vecteurs de caractéristiques générée aux modèles de mouvement basés sur le modèle de Markov caché dans la base de données de sorte à calculer sa probabilité pour chaque modèle de mouvement qui est présent dans la base de données ;
- sélectionner le mouvement déterminé par le modèle de mouvement avec la probabilité calculée la plus élevée comme mouvement de la cible ; **caractérisé en ce que** l'étape consistant à trouver des vecteurs de caractéristiques de la cible dans la cellule de distance comprend les étapes consistant à
- générer un signal continu ayant une fréquence de répétition d'impulsions constante en additionnant consécutivement les impulsions reçues par le radar pulsé avec une répétition d'impulsions constante à des intervalles de traitement cohérents successifs,
- recevoir un signal à une certaine longueur de fenêtre à intervalles périodiques à partir du signal généré,
- trouver un vecteur de caractéristiques en multipliant le signal reçu par une matrice de transformation.

2. Procédé selon la revendication 1, **caractérisé en ce que** l'étape d'obtention de la base de données comprend les étapes consistant à : entraîner le modèle de Markov caché de manière itérative pour un mouvement par un procédé d'anticipation-maximisation avec un ensemble d'entraînement contenant les données radar pulsées obtenues de nombreuses personnes différentes lors de l'exécution d'un certain nombre de mouvements à modéliser et la série de vecteurs de caractéristiques extraite desdites données ; calculer, à la fin de l'entraînement, les paramètres du modèle, c'est-à-dire, la probabilité de transition d'un état à l'autre, la probabilité que les vecteurs de caractéristiques observés appartiennent à un état et la probabilité d'être le premier état ; finaliser le modèle pour ce mouvement en mettant fin à l'entraînement lorsque les probabilités obtenues avec le modèle mis à jour à la fin d'une itération pour une série de vecteurs de caractéristiques dans l'ensemble d'entraînement pendant l'entraînement sont proches des valeurs de probabilité obtenues avec le modèle dans une itération précédente ; créer une base de données à partir de modèles après finalisation des modèles pour tous les mouvements.

3. Procédé selon la revendication 1, **caractérisé en ce que** la matrice de transformation est formée en utilisant l'analyse de composant principal sur un ensemble d'entraînement.

4. Procédé selon la revendication 1, **caractérisé en ce que** la matrice de transformation est formée en étant utilisée sur l'ensemble d'entraînement ne contenant que le mouvement correspondant de sorte à être spécifique à chaque mouvement.

5. Procédé selon la revendication 1, **caractérisé en ce que** dans l'étape de génération d'un signal continu ayant une fréquence de répétition d'impulsions constante en additionnant consécutivement les impulsions reçues par un radar pulsé avec une répétition d'impulsions constante à des intervalles de traitement cohérents successifs, lorsque différentes fréquences de répétition d'impulsions sont utilisées à différents intervalles de traitement cohérents, un signal continu ayant une fréquence constante de répétition des impulsions est généré en convertissant tous les intervalles de traitement cohérents par un procédé de conversion des fréquences de balayage asynchrones de sorte qu'elles aient la même fréquence de répétition des impulsions et en ajoutant consécutivement les intervalles de traitement cohérents ayant différents nombres d'impulsions avec les fréquences de répétition des impulsions converties.

6. Procédé selon la revendication 1, **caractérisé en ce qu'**il comprend les étapes consistant à contrôler, après l'étape de détermination d'une cellule de distance pour une cible détectée, si la cible modifie la cellule de distance pendant sa transition d'un intervalle de traitement cohérent à l'intervalle de traitement cohérent suivant ; trouver la quantité de propagation de la cible dans deux cellules de distance adjacentes en contrôlant l'effet de propagation de la cible aux cellules de distance dû au filtrage harmonique, lorsque la cible modifie la cellule de distance ; et corriger les fluctuations d'amplitude par multiplication de la fonction inverse de ce degré de propagation par les valeurs calculées dans les cellules de distance.

7. Procédé selon la revendication 1, **caractérisé en ce qu'**il comprend les étapes consistant à déterminer le type de mouvement d'une cible manuellement, par exemple par un opérateur, ou à confirmer par l'opérateur la décision de classification prise par le procédé, et à mettre à jour les paramètres basés sur le modèle de Markov caché du mouvement déterminé dans la base de données à l'aide des données de vecteur de caractéristiques reçues de sorte à actualiser la base de données pendant le fonctionnement.
